# EUROPEAN PATENT APPLICATION

(11) **EP 0 875 727 A1**
(43) Date of publication of application: **04.11.1998**
(21) Application number: 98107678.9
(22) Date of filing: 28.04.1998
(51) Int. Cl.: G01B 7/00, G01B 7/02, G01B 7/14, G01D 11/24, F15B 15/28

(54) **A contact-free sensor and a method for manufacturing a contact-free sensor**

(30) Priority: 29.04.1997 DK 47897
(71) Applicant: Brath ApS, 8270 Hojbjerg (DK)
(72) Inventor: Brath, Lars Erik, 8270 Hojbjerg (DK)
(74) Representative: Nielsen, Leif

(57) **Abstract**

A sensor (2) is described. The sensor is divided into two chambers (29,30) by means of a partitioning wall (28). Detecting means (33) are situated in the first chamber (29) and the electric connections between the conductors of the cable and the wire ends of the coil will be in a second chamber. The armouring (36) of the cable will also be in the second chamber. After fitting the housing (19) of the sensor with filler material, and when this is cured, there will be achieved an embedment of connection points and cable armouring, and also a firm connection between cable and sensor.

In order to ensure evacuation of all air, the sensor is subjected to vacuum until the filler material has been cured. After evacuating air, the housing (19) is filled up two or three times to ensure a complete filling with filler material.

## Description

The present invention relates to a contact-free sensor comprising a housing containing detecting means and a ceramic plate, and which is filled with a curable filler material. The invention also relates to a method for manufacturing a contact-free sensor of this kind.

The present invention has appeared in connection with the making of a sensor to a lock cylinder in which it is wished to ensure location of the end position of the piston. The invention has been developed in connection with such lock cylinders used for closing bow ports, doors, ramps, and the like on ships and ferries. However, the invention is not only intended for this use, and a sensor according to the invention may be applied to other components and lock cylinders.

In connection with sensors used for lock cylinders it has appeared to be a disadvantage that these have a relatively long stroke. In order to achieve a sure indication of the end position of the piston within a cylinder, the sensor should extend perpendicularly out from a cylinder. Since the hitherto known contact-free end stop sensors have had a length of 80 mm, this has given rise to a risk of breaking. This means that the known sensors have not been suitable for surroundings where there is a risk of breaking and where the functions are very vital. If a person uses the cylinder as a footstep, there will be a very great risk that the projecting sensors are broken of or that cables are torn of. This often happens on ships.

Therefore it is wished to provide a sensor which is simple to manufacture and which gives a sure indication of the presence of a means, e.g. a piston, while at the same time the sensor is very sturdy and has a relatively small extension outside the construction, preferably a lock cylinder, in which the sensor is applied. It is also a purpose to provide a sensor of the kind that may be subjected to very high pressures existing in the hydraulic cylinder, i.e. pressure in the magnitude 4-500 bar or higher.

Sensors of the kind mentioned in the introduction, e.g. from DE A 38 05 636, are known. This publication describes a capacitive sensor having a coil support 1 around which there is wound a coil 3. The coil support is placed in a ceramic casing intended to be in contact with the inner side of a cylindrical housing, where the hollow interior of the housing is filled with a filler material. This publication does not show any solution to the problem of how the wire connection may be established to permit the manufacture of a sturdy sensor.

Other kinds of sensors where a coil is embedded in the filler material are known, e.g. from US Patent No. 5 302 894. This publication does not give any indication either of how the sensor may be made sturdy enough to withstand large pressure and at the same time be suitable for an environment, where it is subjected to shocks and knocks, etc.

It is the purpose with the present invention to indicate a sensor of the kind mentioned in the introduction and which meets the above wishes for a sensor, and to indicate a method making it possible to produce such a sturdy sensor in a simple way.

This is achieved according to the present invention with a sensor that is particular in that the housing is divided into two chambers by a partitioning wall, where a first chamber contains the detecting means and the ceramic plate, that the partitioning wall is provided with a throughgoing passageway for the wires of the detecting means to a second chamber containing an electric connection between the wires and an armoured cable, that the ceramic plate constitutes an external wall in the first chamber, and that the housing is filled with the filler material so that the ceramic plate rests on the filler material.

The method according to the invention is particular in that the detecting means are premounted on the partitioning wall dividing the housing into a first chamber and a second chamber, that wires for the detecting means are passed through a passageway in the partitioning wall, that the wires are connected with an armoured cable behind the partitioning wall, that the partitioning wall is mounted in the housing as the cable is passed through the back of the housing, the armouring extending into the second chamber of the housing, that the ceramic plate is placed at the front of the housing, that the housing is disposed vertically, resting on its front, that the filler material is tilled into the housing from its back, that the sensor is placed under vacuum, whereafter the vacuum is removed, and that the housing is preferably filled up with fillermaterial once or twice whereafter the filler material is cured.

As the sensor is arranged with two chambers established by means of a separate partitioning wall, it is possible to premount the detecting means on one side of the partitioning wall, and where the electric connections between the wires of the detecting means and the conductors of the cable are placed immediately behind the partitioning wall, so that these in the finished sensor will be inside a second chamber. As the cable extends into the second chamber, the filler material will constitute a firm and solid connection with the armouring of the cable, after the filler material has been cured. The cable will thus have a safe connection with the sensor without having to be limited to the tensile force allowed by the very thin wires extending from the detecting means.

The sensor will resist even very high pressures that may e.g. arise in a hydraulic cylinder, when the sensor is used. By filling the chamber with filler material so that the ceramic plate rests on the filler material, there will be no risk of transmitting forces which may damage the detecting means. The detecting means often comprise fragile elements, like ferrite cores for coils. They can only stand up to very small loads in order not to break. At the same time, it will be necessary that the detecting means are placed as near as possible to the ceramic plate for creating a sufficiently large field for establishing a sure indication of the presence of the piston or the like at level with the sensor. The pressure acting on the ceramic plate is transferred via the filler material to the partitioning wall and the housing. Thus, there will not occur bending stresses in the detecting means. The pressure transmitted from the ceramic plate to the partitioning wall will also contribute to that it is pressed against a contact edge in the housing.

Alternatively, it will be possible to provide a metal ring, preferably of steel, around the ferrite core. This steel ring will contribute to protect the ferrite core against damages or break down at dynamic loads. The ring may also have such a height that it is contributing to supporting the ceramic plate. However, the steel ring may also have a height that is a little lesser than the ferrite core, so that the ceramic plate only rests on the filler material.

A sensor may be produced with a relatively small length, as it is not necessary with a particular space for mounting the cables on the wires of the detecting means. Furthermore, as the cable is secured to the sensor via the engagement between the cable armouring and the filler material, the use of special means to fasten the cable to the housing is not required. The premounting takes place in a very simple way, as the cable is passed through the housing, whereafter the premounting of the detecting means, the partitioning wall, and the establishing of the electric connections take place before the cable is pulled back with the partitioning wall and the detecting means so that these are placed in the housing. As the housing is filled with filler material in a vertical state, air will be evacuated upwards. Since the sensor during the filling is subjected to vacuum, possible air in the housing or air bubbles in the filler material will easily be evacuated. Hereby the risk of insufficient filling is lessened and thereby the possibility of establishing a firm connection is increased. In order to achieve a complete filling of the sensor with filler material, it is filled up several times. In practice, it has been possible to fill a sensor by a filling up two or three times. Before a final curing of the filler material, it will thus be ensured that the housing of the sensor is completely filled with filler material. Hereby, there is achieved a sturdy sensor, where there is no risk of bending stresses on elements in the sensor, as there will also be a secure and firm connection between the filler material and the cable armouring. If the housing is provided with a conical tapering against the rear end of the housing where the cable is introduced, there will also occur a wedge effect, when a tensile force is acting in the cable. Hereby the risk of the cable being pulled free of the sensor is further reduced.

The sensor will preferably be an inductive sensor comprising detecting means in the shape of a ferrite core and a coil. However, alternatively there may be used capacity sensors, light-sensitive sensors, heat-sensitive sensors, or ultrasound sensors in the sensor.

Even though filler material will be able to penetrate the passageway through the partitioning wall as the one where the wires are passing, it is preferred that there is created a further passageway for the passage of the filler material. Hereby there is achieved a particularly great certainty that air bubbles do not occur in the filler material of the sensor.

As the wires from the detecting means are often very thin wires, there will occur difficulties in soldering these to the thick conductors appearing in the cable. Thus, it is preferred that a bottom hole for each wire is made in the partitioning wall and that an end of the conductors, or a bushing placed around such a conductor, is placed in the bottom hole. The bushing may preferably be fastened in the bottom hole by adhesion. The bushing may beforehand be mounted around the conductor of the cable. After placing the bushing in the bottom hole, it may in a simple way be used as a fastening point to which the wires of the detecting means are soldered after they have been wound up around this bushing.

For the purpose of isolation, the partitioning wall is typically made from plastic material. PEEK is preferred. The plastic material may have a content of glass to increase strength, and thereby permit the use of the sensor under higher pressures. It is preferred with a glass content between 20 and 40%. The housing itself can be made as a cylindrical casing of acid-proof steel. The filler material to be used can be a mixture of polyester and polyurethane. However, other filler materials known in the art may also be used.

At its rear end the sensor may be provided with an angular piece which is a union arranged for fastening the cable. With such an angular piece, it will be possible to direct the cable in parallel with a possible cylinder in which the sensor is placed. Hereby the risk of an unintentional load on the cable is avoided. Even though it is preferred to use such an angular piece directing the cable in parallel with a cylinder or the like where the sensor is used, the sensor may also be used without such an angular piece. The sensor according to the invention will thus be made with a length so that the rear end does not extend more than 25 mm outside the pipe stub, oil connection, or the like, at which it is fastened to a cylinder. As a comparison, the known sensors typically have a length of 70-80 mm.

The invention will be described further with reference to the attached drawing, in which
- Fig. 1: shows a lock cylinder with sensors according to the invention and connected with a central data processing unit,
- Fig. 2: is a partial view partially in section for illustrating the position of the sensor on the lock cylinder,
- Fig. 3: is a side view partially in section for illustrating a sensor according to the invention,
- Fig. 4: is an exploded view partially in section for illustrating the components forming a part of the sensor shown in Fig. 3,
- Fig. 5: is a view corresponding to Fig. 4 for illustrating a further embodiment of a sensor according to the invention,
- Fig. 6: is a partial view for illustrating a further embodiment of a sensor according to the invention,
- Figs. 7 and 8: are a side view and an elevated view for illustrating the method for manufacturing the sensor according to the invention, respectively, and
- Fig. 9: is a view corresponding to Fig. 4 for illustrating a further embodiment of a sensor according to the invention.

Identical or corresponding elements in the different Figures of the drawing will be denoted with the same reference number. Therefore, no specific explanation for all elements in connection with each Figure will be given.

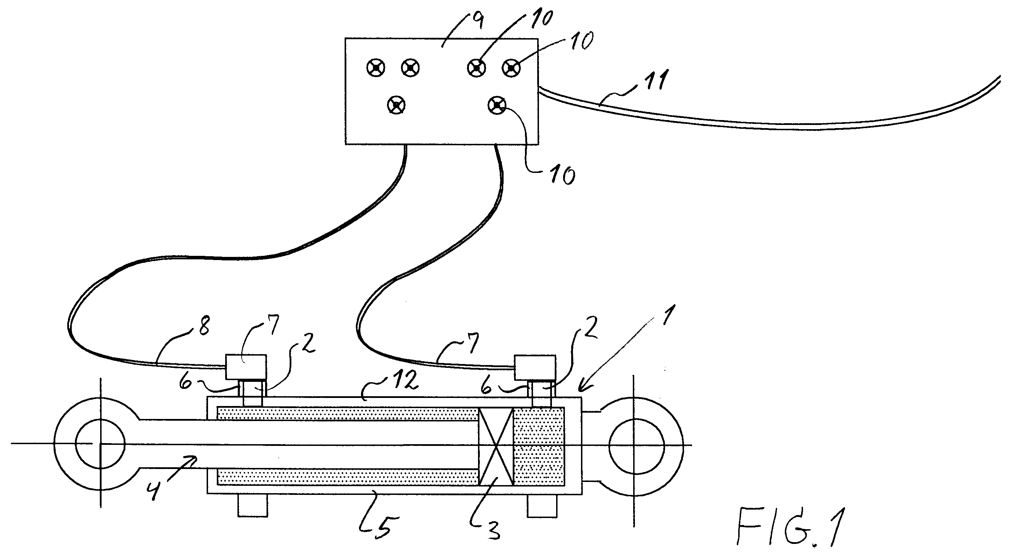

In Fig. 1 is seen a lock cylinder 1 provided with two sensors 2 according to the invention. The cylinder 1 has a piston 3 mounted on a piston rod 4. The piston 3 is provided with locking means so that the piston 3 may be locked in its extreme positions relative to the housing 5 of the cylinder 1. The sensor according to the invention is intended to detect these extreme positions of the piston 3.

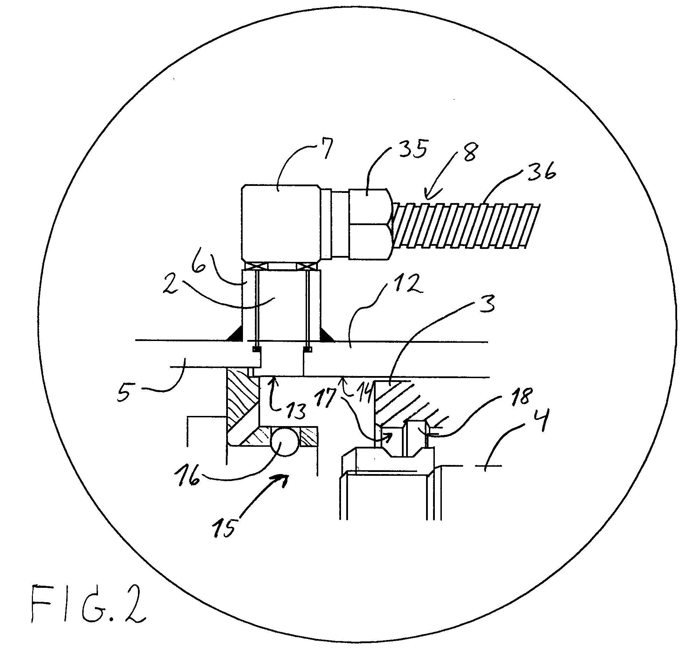

Each sensor 2 comprises a threaded part which is screwed into a threaded sleeve 6 welded (see also Fig. 2) on the cylinder housing 5. At its rear end, the sensor 2 is furthermore provided with an angular piece 7. An armoured cable 8 fastened to the sensor 2 creates a wire connection with a central data processing unit 9, which collects and processes data from one or more lock cylinders. The electronic data processing unit may be provided with indication lamps 10 indicating correct or incorrect position of the lock cylinder 1. The data processing unit is connected via a cable 11 with a central surveillance unit, which for example may be intended to be arranged on the bridge of a ship, if the lock cylinder is used for closing bow ports, doors, ramps, and the like on ships and ferries.

In Fig. 2 it is seen more clearly that the sensor 2 is placed so that it extends through the wall 12 in the cylinder housing 5. The foremost end 13 of the sensor is thus about in the same level as the inner side 14 of the cylinder wall 12. The cylinder is provided with a lock 15. The lock 15 comprises a ball 16 intended to be placed in a groove 17 in the front of the piston 3. When the ball 16 is situated at the bottom of the groove 17 in a recess 18, the piston will be in its extreme position where the foremost part of the piston is opposite the sensor 2. The sensor which in the shown embodiment is of the inductive kind, will in a contact-free way register the presence of the piston.

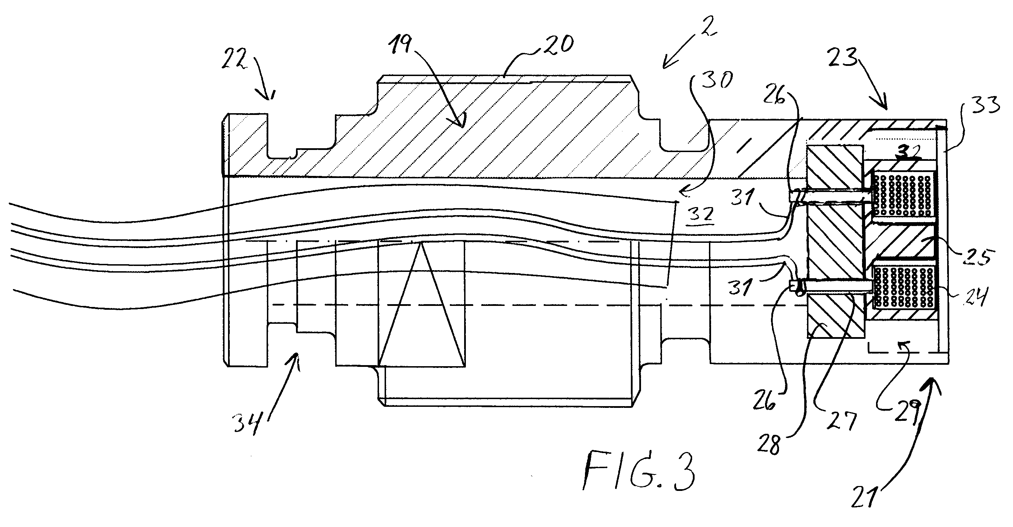

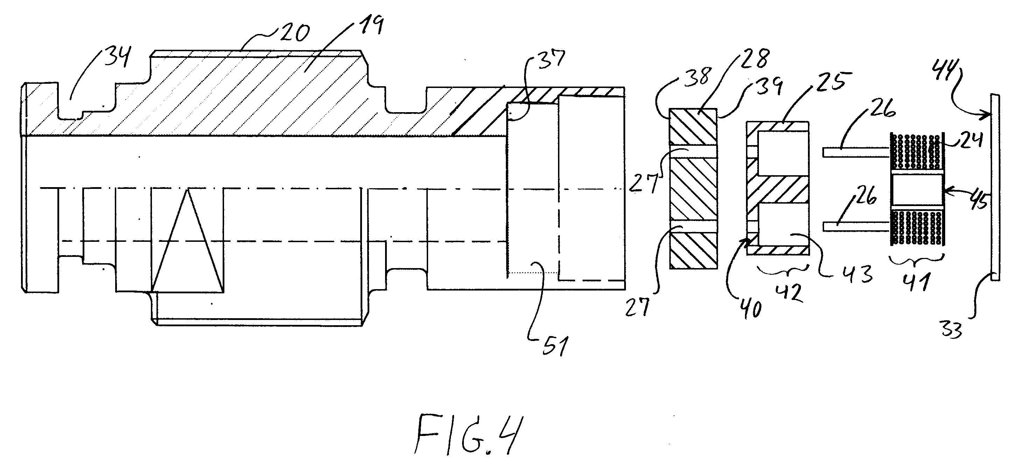

Hereafter, there is referred to Figs. 3 and 4. It is seen that the sensor 2 comprises a housing 19 provided with a thread 20 for engaging the threaded part 6. The housing 19 has a front 21 for placing inside the cylinder and a rear end 22 for placing outside the cylinder 1. The sensor comprises detecting means 23 which in the shown embodiment comprises a coil 24 and a ferrite core 25. The ends of the coil 24 are connected with metallic pins 26 extending through passageways 27 in a partitioning wall 28, which divides the housing 19 into a front chamber 29 and a rear chamber 30. The coil 24 is in the front chamber 29 and the metallic pin 26 extends into the rear chamber 30. The pins 26 are here connected with conductors 31 in the cable 8. The cable 8 comprises an outer armouring (see also Fig. 2) that may be a metallic jacket, a braiding, or the like, at the external side of the cable 8.

The two chambers 29,30 of the housing is filled up with a curable filler material 32 that completely encloses the detecting means 23, the partitioning wall 28 and the cable 8. The front chamber of the housing is covered by a ceramic plate 33 which only rests on the filler material 32 in the front chamber 29. Beside the passageways 27 for the pins 26, the partitioning wall 28 may comprise several passageways (not shown) which easily allow a passage of air and filler material, if the pins 26 largely fill the passageways 27. When the chamber is filled with filler material and this has been cured, there will be achieved a firm connection between the chamber and the armouring on the cable 8. Hereby a connection with a great tensile strength is achieved, whereby the risk of breaking the connection between conductors 31 and coil pins 26 is avoided.

The housing 19 is provided with recesses 34 at its rear end, to which recesses the angular piece 7 may be mounted pivotably. The housing of the sensor and the angular piece 7 will only have a very little extension outside the external side of the cylinder wall 12. As it appears from Fig. 2, the cable 8 may be further fastened to the sensor/angular piece by means of a fastening nut 35 which is screwed into the angular piece 7 and thereby squeezes around the armouring 36 of the cable 8.

As seen from Fig. 4, the housing 19 comprises a contact surface 37 where the partitioning wall 28 will be in contact in the mounted state. When the partitioning wall is in contact with the surface 37 with its surface 38, the ferrite core 25 will rest on the other surface 39 of the partitioning wall. Preferably, there will be established an adhesive connection between the underside 40 of the ferrite core and the surface 39 of the partitioning wall. The coil 24 has a height 41 which is less than the height 42 inside the ferrite core. The coil 24 will thus be placed inside an annular groove 43 in the ferrite core. The ceramic plate 33 will not rest directly on the ferrite core. There will be tiller material 34 between the underside 44 of the ceramic plate 33 and the top side 45 of the coil 24, so that the ceramic plate 33 only rests on the filler material.

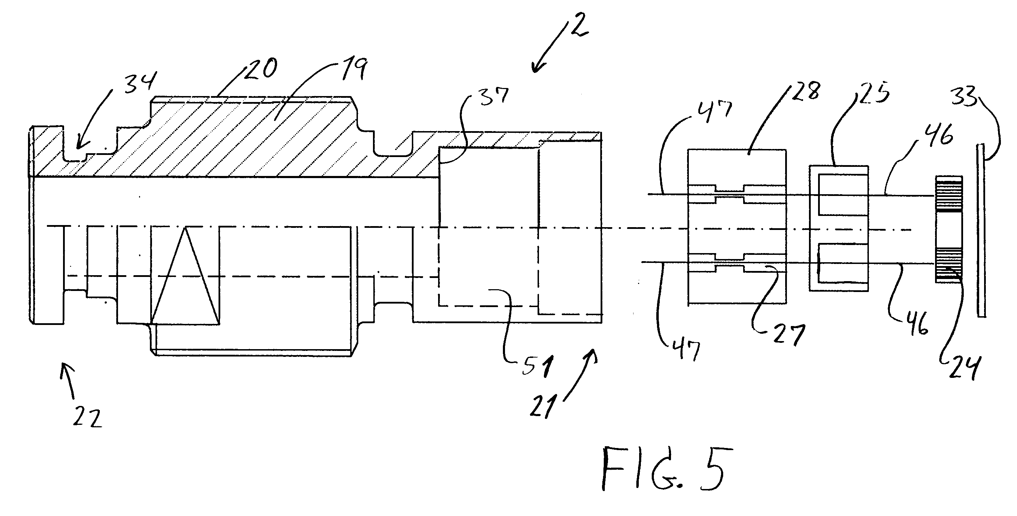

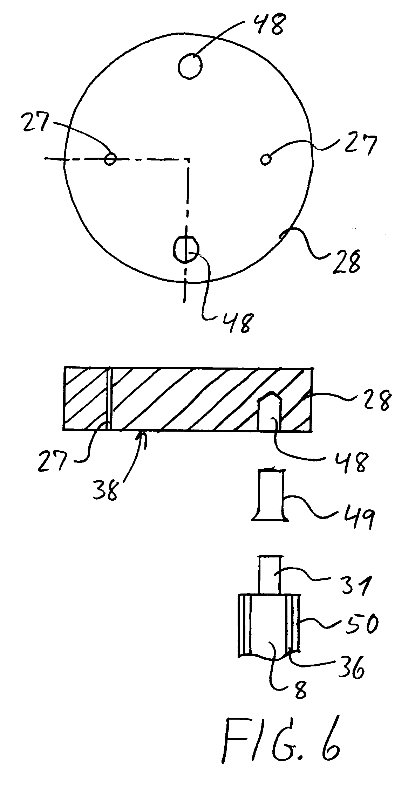

In Fig. 5, there is shown a view of another embodiment of a sensor 2 which substantially corresponds to the view shown in Fig. 4. The embodiment shown in Fig. 5 differs in that the coil 24 in stead of the pins 26 has wire ends 46 passing through the bottom of the ferrite core and through the passageways 27 of the partitioning wall 28. The wire ends 47 are intended to be fastened to the conductors 31 of the cable 8. This may take place either directly in the way illustrated in Fig. 3, or in the way shown in Fig. 6, as will be explained hereinafter.

Fig. 6 shows uppermost a plane view of the partitioning wall 28. The partitioning wall 28 comprises, besides the throughgoing passageways 27 for the wire 46, also bottom holes 48. The bottom holes 48 are intended to face the other chamber 30. Around the end of the conductor 31, there is placed a metal bushing 49 arranged to be fastened in the bottom hole 48. The fastening may take place by squeezing, gluing, or in other ways. The metal bushing 49 will, when mounted, have an end extending over the lateral surface 38 of the partitioning wall 28. The wire end 47 will be wound about the metal bushing and soldered thereto. With this construction it becomes easy to establish an electric connection between the relatively thin wire 47 and the relatively thick conductor 31. The outermost end of the cable 8 has an electrically isolating protective jacket 50 provided around the armouring 36. This isolating jacket may preferably be made of plastic material of the kind that shrinks when subjected to heat.

The partitioning wall 28 forming a part of the different embodiments will preferably be made as a circular plate. This plate is provided to be placed in the housing 19 in a cylindrical opening 51 (see Figs. 4 and 5) so that the circular plate rests on the contact surface 37. The partitioning wall will preferably be made of plastic, and the material PEEK is preferred.

In Fig. 9, there is shown a further embodiment for a sensor 2 mainly corresponding to the sensor shown in Fig. 4. The sensor 2, however, differs in being provided with a metal ring 58, preferably of steel around the ferrite core 25. The inner diameter of the ring 58 corresponds to the outer diameter of the ferrite core 25, and the outer diameter mainly corresponds to the outer diameter of the partitioning wall 28. Alternatively, the outer diameter may be different, if it is ensured that there is room for the filler material outside the ring in the front chamber 29 of the housing 19. The ring 58 serves as protection for the ferrite core 25 so that this does not collapse or break apart when subjected to dynamic loads. Furthermore, the height of the ring 58 may be so that it is contributing to support the plate 33.

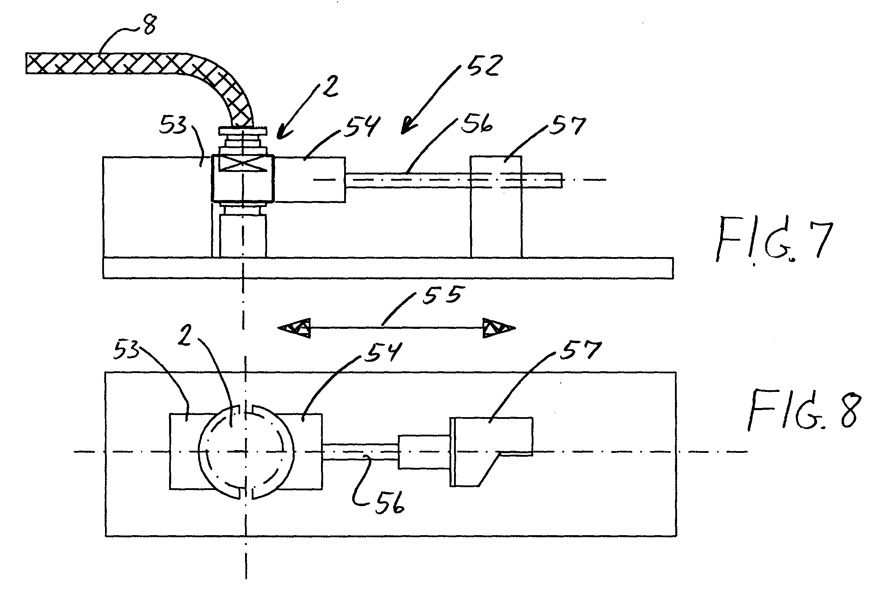

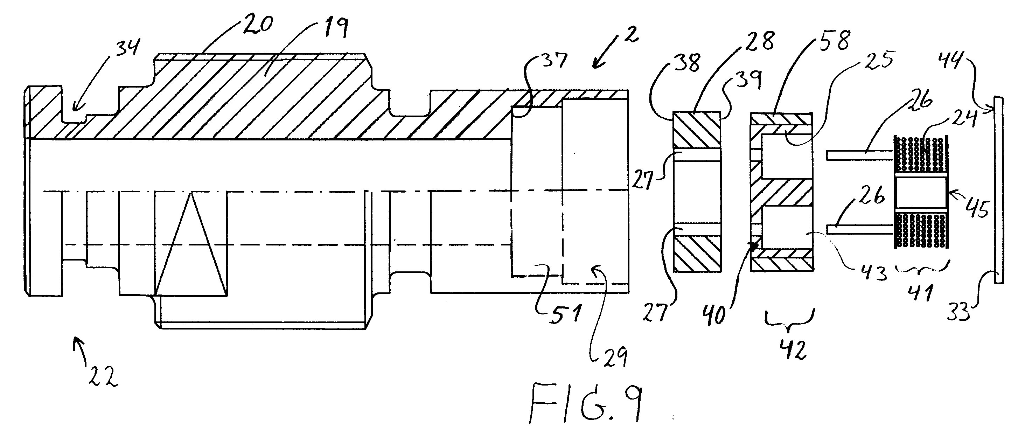

The making of a sensor according to the invention will be explained hereinafter with reference to Figs. 7 and 8.

The sensor 2 is mounted by means of a fixture 52. The fixture 52 comprises a fixed jaw 53 and a movable jaw 54, which squeeze around the housing of the sensor. The movable jaw 54 may be displaced to and fro in the direction of the arrow 55, as a rod 56 may be displaced and locked relative to a console 57. At the manufacture of the sensor, there may be used other kinds of fixtures, as well as it may be possible to make the sensor without the use of the fixture.

The detecting means 23 are premounted. The ferrite core 25 and coil 24 are mounted on the partitioning wall 28, so that the free wires and pins 46,26 extend through the partitioning wall. The armoured cable is drawn through the angular piece and through the housing 19 of the sensor 2. The conductors 31 are connected with the wires and pins 46,26. The partitioning wall 28 with the detecting means mounted thereon are mounted in the opening 51 of the housing and are brought into contact with the surface 37, as the cable is simultaneously passed through the rear end 22 of the housing. When the partitioning wall 28 is placed in contact with the surface 37, the armouring 36 will be in the second chamber of the housing. Hereafter the ceramic plate 47 is placed at the foremost end of the housing, as the housing is placed in a vertical position as shown in Fig. 7, where the housing rests on the front end 21. Hereafter, the filler material is filled in from the rear end 22 of the housing into the gap around the cable 8. The housing is then put under vacuum, e.g. by a vacuum device (not shown) or thee like, where the whole fixture is situated. Subsequently to removing the vacuum, the housing is filled up with filler material two or three times, each time with the subsequent appliance of vacuum. The use of vacuum ensures that possible trapped air or air bubbles are evacuated from the filler material. Hereafter, the filler material is cured in the usual way.

When establishing the connection between the conductors 31 of the cable and the ends 47 of the coil 24, there may be premounted a metal bushing 49 around the cables. The bushing 49 is placed in the bottom hole 48 whereafter the wires 47 are soldered to the bushing 49. The filling up of the housing with the use of vacuum is also to be applied in this situation.

With the described manufacturing procedure, it is easy to premount the detecting means 23 and the cable 8 outside the housing 19 and thereafter to draw partitioning wall, detecting means, etc. into the housing. In this state the soldering points or connection points between the conductors 31 of the cable and the ends of the wires of the core will be inside the second chamber 33. The armouring 36 will also be inside the second chamber. By the subsequent filling up and curing, there will be achieved a very firm connection between sensor and cable.

## Claims

1. A contact-free sensor comprising a housing containing detecting means and a ceramic plate, and which is filled with a curable filler material, **characterised** in that the housing is divided into two chambers by a partitioning wall where a first chamber contains the detecting means and the ceramic plate, that the partitioning wall is provided with a throughgoing passageway for the wires of the detecting means to a second chamber containing an electric connection between the wires and an armoured cable, that the ceramic plate constitutes an external wall in the first chamber, and that the housing is filled with the filler material so that the ceramic plate rests on the filler material.

2. A sensor according to claim 1, **characterised** in that the sensor is an inductive sensor and that the detecting means comprise a ferrite core and a coil.

3. A sensor according to claim 1 or 2, **characterised** in that the partitioning wall has a farther passageway for the filler material.

4. A sensor according to any of the preceding claims, **characterised** in that the side of the partitioning wall facing the second chamber has a bottom hole for each wire, and that the ends of the conductors in the cable are provided with a metal bushing arranged for fastening in the bottom hole and which is used for fastening the corresponding wire extending from the detecting means.

5. A sensor according to any of the preceding claims, **characterised** in that the partitioning wall is made from a circular plate that is disposed in a sliding fit in a cylindrical housing where the plate rests on a contact surface in the second chamber, and that the plate is made of plastic, preferably PEEK.

6. A sensor according to any of the preceding claims, **characterised** in that a metal ring, preferably of steel, is placed around the ferrite core.

7. A method for manufacturing a contact-free sensor comprising a housing which contains detecting means and a ceramic plate covering the front of the housing, and where the housing is filled with a curable filler material, **characterised** in that the detecting means are premounted on a partitioning wall dividing the housing into a first chamber and a second chamber, that wires for the detecting means are passed through a passageway in the partitioning wall, that the wires are connected with an armoured cable behind the partitioning wall, that the partitioning wall is mounted in the housing as the cable is passed through the back of the housing, the armouring extending into the second chamber of the housing, that the ceramic plate is placed at the front of the housing, that the housing is disposed vertically, resting on its front, that the filler material is filled into the housing from its back, that the sensor is placed under vacuum, whereafter the vacuum is removed, and that the housing is preferably filled up with filling material once or twice whereafter the filler material is cured.

8. A method according to claim 7, **characterised** in that the partitioning wall is mounted by sliding it into the housing from the front until it rests on a contact surface in the housing.

9. A method according to claim 7 or 8, **characterised** in that a metal bushing surrounding each of the conductors of the cable is premounted, where the bushing is fastened in a boring in the partitioning wall, and where the wires of the detecting means are soldered to the bushing.

10. Use of a sensor according to claim 1 in a lock cylinder for locating a piston in an extreme position.
